# EUROPÄISCHE PATENTSCHRIFT

(11) **EP 2 428 428 B1**
(45) Veröffentlichungstag und Bekanntmachung des Hinweises auf die Patenterteilung: **14.08.2013**
(21) Anmeldenummer: 10176544.4
(22) Anmeldetag: 14.09.2010
(51) Int. Cl.: B62B 3/02, B62B 3/04

(54) **Transportgerät**
Transport device
Appareil de transport

(43) Veröffentlichungstag der Anmeldung: 14.03.2012
(73) Patentinhaber: Werner Feil GmbH, 59909 Bestwig-Nuttlar (DE)
(72) Erfinder: Feil, Monika, 59909 Bestwig-Nuttlar (DE)
(74) Vertreter: Nunnenkamp, Jörg

(56) Entgegenhaltungen:
- WO-A1-2007/028194
- DE-U1-202006 005 137
- JP-A- 9 095 239
- US-A1- 2008 100 015
- US-A1- 2008 122 192
- US-A1- 2008 272 137

## Beschreibung

Die Erfindung betrifft eine Zusammenfassung aus einem Transportgerät und zumindest einem mit Laufrollen bestückten Transportwagen zur Aufnahme von darauf aufliegendem Transportgut, wobei das Transportgerät mit einer den Transportwagen tragenden Plattform, und mit einem Fahrgestell für die Plattform ausgerüstet ist.

Mit Laufrollen bestückte Transportwagen werden beispielsweise in der Logistikbranche oder auch in der Nahrungsmittelindustrie für vielfältige Aufgaben eingesetzt. Hierzu gehören sowohl der innerbetriebliche Transport als auch der Warenverkehr zwischen Unternehmen. Beispielsweise sind für den Zusammenbau und die Montage von Maschinen unterschiedliche Güter erforderlich, so unter anderem Schüttgüter wie Schrauben, Muttern etc., ebenso wie Roh- oder Halbfertigmaterialien wie Rohre, Platten, Verkleidungen, Kommissionierungen etc.

Da man heutzutage zunehmend eine individuelle Fertigung mit vielen von einem Montagewerker zu absolvierenden Arbeitsschritten präferiert, müssen die vorgenannten und für die Fertigstellung des Produktes erforderlichen Waren und Schüttgüter sämtlich am Arbeitsplatz vorgehalten werden. Das stellt besondere Anforderungen an die Logistik, was die Bestückung mit den gewünschten und erforderlichen Waren einerseits angeht und andererseits die Beherrschung des zur Verfügung stehenden und meistens eng limitierten Vorratsraumes. Ähnliche Anforderungen werden beispielsweise in der Nahrungsmittelindustrie beobachtet, wo die fraglichen Transportwagen beispielsweise zur Aufnahme von Brotwaren, Fleisch und Wurstwaren dienen.

Zu diesem Zweck sind derartige Transportwagen oftmals so ausgerüstet, dass sie sogenannte Euro-Normkästen aufnehmen können, in welchen die fraglichen Waren bevorratet und transportiert werden. Darüber hinaus lassen sich die Transportwagen typischerweise gleichförmig stapeln, wofür zugehörige und vorgesehene Stapelmulden sorgen. Außerdem hat sich eine überwiegende Ausgestaltung aus einem Kunststoff wie beispielsweise Polypropylen (PP) oder auch Polyamid (PA) als besonders günstig erwiesen. - Die beschriebenen Transportwagen werden beispielhaft unter der Marke "rolldolly" von der Anmelderin vertrieben. Außerdem fungieren vergleichbare Transportwagen als Basis für Rollcontainer, die dort unter dem Markennamen "rolltainer" angeboten werden.

Im Stand der Technik nach der DE 10 2007 015 095 A1 wird bereits ein Untersatz für Transportpaletten und andere auf Sicherungselementen unter Bildung einer Brücke abstellbare Transport- und Lagereinheiten vorgestellt. Zu diesem Zweck ist eine Hubbühne vorgesehen, die von einem Satz Schwenkarmen getragen wird. Mit deren Hilfe lässt sich die Hubbühne aus einer abgesenkten stabilen Lage über einen oberen Scheitelpunkt hinweg bis in eine gegenüber der abgesenkten Lage höhere stabilere Lage verschwenken. Die Hubbühne ist an mindestens einem Anschlag abgestützt.

Für die Führung und Bewegung der Transportwagen beispielsweise beim innerbetrieblichen Transport sind sogenannte Führungseinrichtungen bekannt, die in dem Gebrauchsmuster DE 20 2007 006 852 U1 beschrieben werden. Die Führungselemente sind zur Befestigung auf einem Untergrund vorgesehen. Außerdem lassen sich die Führungselemente zumindest paarweise beabstandet voneinander montieren. Für die Aufnahme der Transportwagen bilden die Führungselemente entlang von Längskanten eine muldenförmige Führungsnut. In dieser Führungsnut lassen sich die Laufrollen der Transportwagen auf dem Untergrund verfahren.

Der Stand der Technik nach der WO 2007/028194 A1 befasst sich mit einem Transportwagen zur Aufnahme und Beförderung von Transportgut. Zu diesem Zweck ist unter anderem eine separate Unterstützungsstruktur vorgesehen.

Beim gattungsbildenden Stand der Technik nach der DE 20 2006 005 137 U1 wird so vorgegangen, dass das Transportgerät zur Aufnahme mehrerer nebeneinander angeordneter Untersätze bzw. Transportwagen geeignet ist. Zu diesem Zweck ist das bekannte Transportgerät als ein Tieflader mit einer zwischen zwei mit Laufrollen bestückten Fahrgestellen angeordneten tief liegenden Plattform ausgebildet. Die tief liegende Plattform nimmt die Untersätze bzw. Transportwagen auf. Beide Fahrgestelle tragen auf Seiten der Plattform Stützständer. Außerdem ist an mindestens einem seitlichen Längsrand der Plattform eine Auffahrrampe für die fahrbaren Untersätze bzw. Transportwagen vorgesehen. Die Auffahrrampe lässt sich aus ihrer im Wesentlichen horizontalen Auffahrposition in eine im Wesentlichen vertikale Verschließposition hochklappen und verriegeln.

Im Stand der Technik nach der DE 20 2006 005 137 U1 werden also bereits Ansätze beschrieben, ein Transportgerät für die Transportwagen an sich bereitzustellen. Tatsächlich dienen die Transportwagen - wie bereits beschrieben - üblicherweise dazu, von einem Punkt, beispielsweise dem Lager in einer Firma, auf dem Transportwagen aufliegendes Transportgut zur Verarbeitung zu einem Verarbeitungsort zu transportieren. Am Verarbeitungsort wird das Transportgut von dem Transportwagen entfernt. Das kann dadurch geschehen, dass ein oder mehrere von dem Transportwagen getragene Transportkästen mit dem fraglichen Transportgut abgenommen werden. Alternativ hierzu kann das Transportgut aber auch sukzessive von dem Transportwagen aufgenommen und verarbeitet werden.

So oder so stellt sich bei der beschriebenen Vorgehensweise das Problem, die einzelnen Transportwagen zu sammeln und an einen Sammelpunkt zurückzubefördern. Dazu hat man bisher mit beispielsweise Gabelstaplern gearbeitet, die mehrere übereinander gestapelte Transportwagen zum Sammelpunkt transportiert haben.

Im Rahmen der DE 20 2006 005 137 U1 ist nun bereits ein Transportgerät für solche Transportwagen vorgeschlagen worden. Dieses kann allerdings nicht in allen Aspekten überzeugen. Denn das bekannte Transportgerät ist relativ ausladend aufgebaut und von seinem Anwendungsspektrum her limitiert. Das heißt, mit Hilfe des bekannten Transportgerätes können die Rollwagen ihrerseits ausschließlich rollend transportiert werden, weil das bekannte Transportgerät zu diesem Zweck mit zwei laufrollenbestückten Fahrgestellen ausgerüstet ist. Das heißt, ein alternativer Transport mit beispielsweise einem Gabelstapler ist ebenso wenig möglich wie eine Bevorratung des Transportgerätes beispielsweise in einem Regal. Hier setzt die Erfindung ein.

Der Erfindung liegt das technische Problem zugrunde, eine Zusammenfassung des eingangs beschriebenen Aufbaus so weiter zu entwickeln, dass ein flexibler Einsatz bei zugleich kompakten Ausmaßen zur Verfügung gestellt wird.

Zur Lösung dieser technischen Problemstellung ist eine gattungsgemäße Zusammenfassung aus einem Transportgerät und zumindest einem mit Laufrollen bestückten Transportwagen zur Aufnahme von darauf aufliegendem Transportgut dadurch gekennzeichnet, dass das Fahrgestell und die Plattform zur einzelnen und gemeinsamen Nutzung getrennt voneinander ausgelegt sind und zu diesem Zweck die Plattform lösbar auf dem Fahrgestell ruht. Das Fahrgestell und die Plattform lassen sich also bedarfsweise funktionell trennen und zusammenführen.

Zu diesem Zweck ruht die Plattform lösbar auf dem Fahrgestell. Dabei können zur gegenseitigen Ausrichtung von einerseits der Plattform und andererseits dem Fahrgestell Zentriermittel ineinandergreifen. Diese Zentriermittel sind einerseits an der Plattform und andererseits an dem Fahrgestell vorgesehen. - Durch diese Maßnahmen der Erfindung wird zunächst einmal eine besonders vielseitige Nutzung des Transportgerätes zur Verfügung gestellt, die bisher nicht möglich war. Denn das Fahrgestell und die Plattform stellen mechanisch und funktionell voneinander unabhängige Elemente dar. Das heißt, das Fahrgestell einerseits und die Plattform andererseits können getrennt voneinander genutzt werden. Auch eine gemeinsame Nutzung ist denkbar. Dann ruht die Plattform lösbar auf dem Fahrgestell.

Die einzelne und singuläre Nutzung des Fahrgestelles eröffnet beispielsweise die Möglichkeit, an Stelle der Plattform Paletten und hier insbesondere sogenannte Europaletten zu transportieren. Zu diesem Zweck mag das Fahrgestell mit Rollen ausgerüstet sein. Bei diesen Rollen kann es sich um ein Paar Lenkrollen und ein Paar Bockrollen handeln. Die Rollen sind dabei jeweils an Portale des Fahrgestells angeschlossen.

Tatsächlich verfügt das Fahrgestell typischerweise über wenigstens zwei Portale, die im Allgemeinen durch wenigstens einen die beiden Portale miteinander verbindenden Unterzug gekoppelt sind. Meistens sind zwei (oder mehr) Unterzüge vorgesehen, die jeweils längsrandseitig des Fahrgestells verlaufen. Auf dem Unterzug liegt die Plattform auf, falls die Plattform und das Fahrgestell miteinander lösbar vereinigt sind.

Jedenfalls kann das Fahrgestell beispielsweise bei entfernter Plattform zum Transport von Paletten und hier insbesondere Europaletten genutzt werden. Hierbei macht sich die Erfindung den Umstand zunutze, dass der Abstand der beiden Portale des Fahrgestells und auch der Unterzug so ausgelegt sind, dass zwischen die beiden Portale eine oder mehrere Europaletten platziert werden können. Auch sogenannte Halbpaletten oder Düsseldorfer Paletten können von dem Fahrgestell aufgenommen werden. Dadurch lässt sich das Fahrgestell einer vielseitigen Nutzung zuführen. Denn dieses ist erfindungsgemäß nicht nur für den Transport der Plattform zur Aufnahme der Transportwagen ausgelegt und geeignet, sondern kann alternativ hierzu auch für den Transport von Paletten genutzt werden. Selbstverständlich lassen sich auch andere Güter von dem fraglichen Fahrgestell bei Bedarf transportieren. Jedenfalls wird deutlich, dass das Fahrgestell nicht (nur) zur Vereinigung mit der Plattform und folglich zum Transport der Transportwagen geeignet und vorgesehen ist.

In gleicher Weise kann die Plattform einer vielseitigen und variablen Nutzung zugeführt werden. So fungiert die Plattform primär zur Aufnahme der mit den Laufrollen bestückten Transportwagen und ihrem Transport von beispielsweise einem Verarbeitungsort zu einem Sammelort. Das kann erfindungsgemäß mit Hilfe des Fahrgestells erfolgen, auf welchem die Plattform lösbar ruht. Alternativ hierzu lässt sich die Plattform aber auch beispielsweise mit einem Gabelstapler oder einem anderen Transportfahrzeug - unabhängig von dem Fahrgestell - bewegen. Außerdem besteht die weitere Möglichkeit, die Plattform mit beispielsweise darauf befindlichen Transportwagen in einem Lager zu bevorraten. Hierbei mag es sich um ein Hochregallager handeln.

Da die Plattform typischerweise die Außenabmessungen einer genormten Palette und insbesondere einer Europalette aufweist, lässt sich die Plattform mit den darauf befindlichen Transportwagen unschwer in bereits vorhandene Hochregallager einfahren und aus diesen wieder entnehmen. Das kann beispielsweise mit Hilfe eines Gabelstaplers erfolgen. Zu diesem Zweck ist die Plattform vorteilhaft mit Aufnahmekammern für Hebelelemente an Transportfahrzeugen und hier insbesondere Gabelzinken eines Gabelstaplers ausgerüstet. Folgerichtig kann die Plattform nicht nur mit Hilfe des Fahrgestells einen Transport erfahren sondern lässt sich vorteilhaft auch mit einem anderen Transportfahrzeug bewegen, stapeln, in ein Regal ein- und ausfahren etc. Dadurch können die Transportwagen ähnlich wie auf Paletten befindliche Güter gehandhabt und bevorratet werden und wird zugleich die Möglichkeit geschaffen, mit Hilfe des Fahrgestells für einen zumeist rollenden Transport der Transportwagen sorgen zu können.

Dabei lassen sich unschwer mehrere der erfindungsgemäßen Transportgeräte über Deichsel und Kupplung miteinander zu einem Transportgerätezug kombinieren. In diesem Zusammenhang versteht es sich, dass beispielsweise das letzte Transportgerät im Transportgerätezug selbstlenkend ausgelegt ist, oder werden kann, um eine problemlose Beförderung in einem Betrieb auch bei Kurvenfahrt zu ermöglichen.

Im Detail hat es sich bewährt, wenn die Plattform mit wenigstens zwei voneinander beabstandeten Führungselementen zur Aufnahme der Laufrollen des Transportwagens ausgerüstet ist. Es können auch zwei oder mehr benachbarte Führungselementpaare vorgesehen werden. In diesem Fall werden von der Plattform typischerweise zwei Transportwagen jeweils hintereinander von einem Führungselementpaar aufgenommen. Die beiden Transportwagen sind dabei ebenso wie die Führungselemente quer zur Fahrtrichtung des Fahrgestells angeordnet. Hierbei handelt es sich jedenfalls um die überwiegende Fahrtrichtung des Fahrgestelles bei einer Geradeausfahrt.

Um die Transportwagen unschwer auf die Plattform zu befördern und mit ihren Laufrollen in die Führungselemente bzw. an dieser Stelle realisierte Führungsschienen einzuführen, ist die Plattform vorteilhaft an wenigstens einem Seitenrand mit einer angelenkten Auffahrrampe für den jeweiligen Transportwagen ausgerüstet. Dabei ist jeweils eine Auffahrrampe je Führungselementpaar vorgesehen. Die Auffahrrampe ist an wenigstens einer Querrandseite der Plattform angelenkt. Meistens sind beide Querrandseiten der Plattform mit jeweils zumindest einer angelenkten Auffahrrampe ausgerüstet, um die Transportwagen von beiden Seiten her auf die Plattform unschwer auf- und wieder hinabfahren zu können.

Die Plattform ist vorteilhaft mit einem Sicherungsrahmen ausgerüstet. Der Sicherungsrahmen ist im Allgemeinen abnehmbar im Vergleich zu der Plattform ausgelegt. Im Detail ist der Sicherungsrahmen darüber hinaus noch zusammenlegbar respektive aufklappbar ausgebildet. Auf diese Weise lässt sich der Sicherungsrahmen je nach Bedarf an der Plattform anbringen und von dieser wieder entfernen. Typischerweise wird man den Sicherungsrahmen dann an der Plattform platzieren, wenn ein oder mehrere Transportwagen von der Plattform getragen werden. Dies erst recht, wenn der jeweilige Transportwagen seinerseits einen oder mehrere Transportkisten respektive Transportbehälter aufnimmt.

Ist jedoch kein Transportwagen auf der Plattform angeordnet, so lässt sich der Sicherungsrahmen zusammenlegen bzw. zusammenklappen. Zu diesem Zweck setzt sich der Sicherungsrahmen meistens aus mehreren Sicherungselementen zusammen, die in zusammengelegtem Zustand auf der Plattform aufliegen. Insbesondere lassen sich die fraglichen Sicherungselemente in den Führungselementen halten, bei denen es sich um muldenförmige Führungsnuten bzw. Führungsschienen handelt. Die einzelnen Sicherungselemente des Sicherungsrahmens sind meistens gelenkig aneinander angeschlossen und bilden eine Baueinheit. Dadurch gelingt der Auf- und Abbau des Sicherungsrahmens besonders einfach und kann der Sicherungsrahmen praktisch vollständig in den muldenförmigen Führungsnuten oder Führungsschienen bzw. den Führungselementen in zusammengelegtem Zustand aufgenommen werden.

Auf diese Weise lässt sich die Plattform besonders platzsparend in beispielsweise einem Regal bevorraten. Zu dem kompakten Aufbau trägt auch der weitere Umstand bei, dass die Plattform auf dem Unterzug zwischen den beiden Portalen aufliegt und oberseitig im Wesentlichen mit der Oberfläche der Portale abschließt. Das heißt, die Bauhöhe des erfindungsgemäßen Transportgerätes wird primär von der Bauhöhe der beiden Portale des Fahrgestells vorgegeben. Das gilt zumindest für den Fall, dass der Sicherungsrahmen zusammengelegt ist und in zusammengelegtem Zustand in den muldenförmigen Führungsnuten aufgenommen wird. - Schließlich mögen noch ein oder mehrere Blockiermittel vorgesehen werden, mit deren Hilfe die Transportwagen insbesondere in beladenem Zustand auf der Plattform fixiert werden. Bei diesen Blockiermitteln handelt es sich vorteilhaft um Anschlagzapfen am Fahrgestell. Die Anschlagzapfen können bei Bedarf quer zum jeweiligen Transportwagen ausgeschwenkt werden und lassen sich beispielsweise zwischen zwei in Längsrichtung aneinander anschließende Transportwagen einschwenken. Dadurch werden die Transportwagen respektive die auf den Transportwagen befindlichen Transportgüter voneinander separiert und erfahren die Transportwagen eine zusätzliche Fixierung auf der Plattform.

Tatsächlich werden die Transportwagen nämlich üblicherweise mit Hilfe der Auffahrrampen festgelegt. Denn die jeweilige Auffahrrampe lässt sich aus einer im Wesentlichen horizontalen Auffahrposition in eine im Wesentlichen vertikale Blockierposition hochklappen und in dieser verriegeln. Befinden sich die jeweiligen Auffahrrampen in dieser verriegelten Blockierposition, so können die Transportwagen nicht seitlich von der Plattform herunterrollen. Außerdem erfahren die Transportwagen eine zusätzliche Fixierung, indem ihre Laufrollen in die muldenförmigen Führungsnuten auf der Plattform eingreifen. Für eine zusätzliche Festlegung sorgen dann noch die angesprochenen Blockiermittel bzw. Anschlagzapfen, die zwischen in Längsrichtung aneinander anschließende Transportwagen eingeschwenkt werden können.

Im Folgenden wird die Erfindung anhand einer lediglich ein Ausführungsbeispiel darstellenden Zeichnung näher erläutert; es zeigen:
- Fig. 1: das erfindungsgemäße Transportgerät in einer perspektivischen Übersicht,
- Fig. 2: den Gegenstand nach Fig. 1 teilweise beladen mit Transportwagen und
- Fig. 3A und 3B: das Transportgerät nach den Fig. 1 und 2 in seinen wesentlichen Bestandteilen, und zwar einerseits das Fahrgestell (Fig. 3A) und andererseits die Plattform (Fig. 3B).

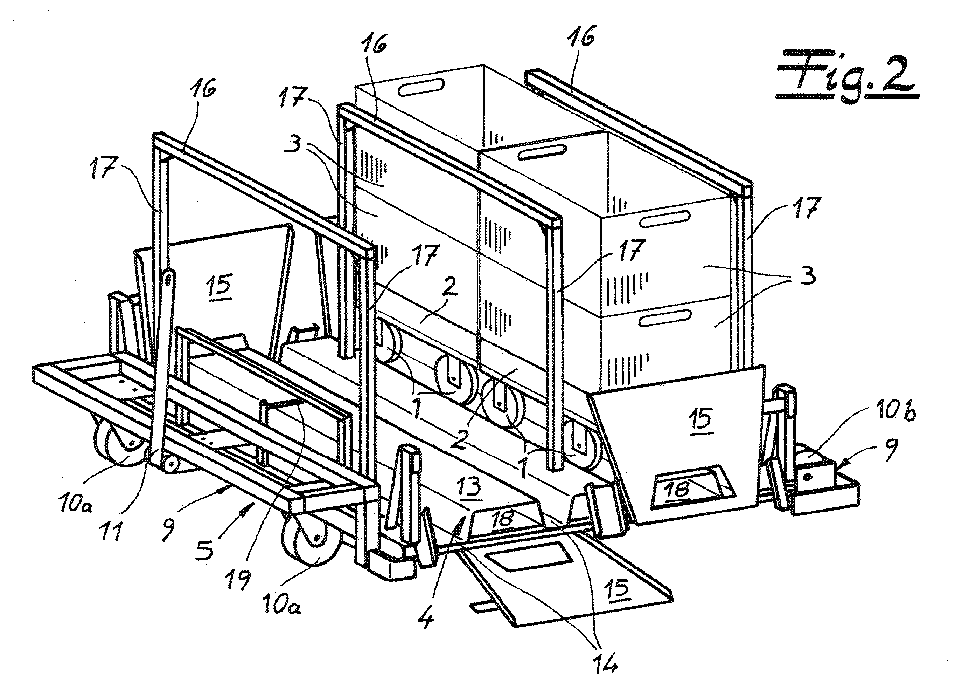

In den Figuren ist ein Transportgerät für zumindest einen mit Laufrollen 1 bestückten Transportwagen 2 dargestellt. Im Rahmen der Fig. 2 erkennt man mehrere Transportwagen 2, die von dem Transportgerät aufgenommen werden.

Im Beispielfall kann das Transportgerät insgesamt vier Transportwagen 2 aufnehmen und beispielsweise von einem Verarbeitungsort zu einem Sammelort oder umgekehrt befördern. Die einzelnen mit Laufrollen 1 bestückten Transportwagen 2 sind vorliegend zur Aufnahme von Transportkisten bzw. Transportbehältern 3 ausgerüstet.

Bei diesen Transportbehältern 3 kann es sich nicht einschränkend um sogenannte KLT (Kleinladungsträger)-Kästen handeln. Solche KLT-Kästen bzw. Kleinladungsträger 3 stellen Ladungsträger dar, deren Eigenschaften wie zum Beispiel Abmessungen, Gewicht oder Werkstoff genormt sind. Mit Hilfe solcher Kleinladungsträger bzw. KLT-Kästen 3 lässt sich ein reibungsloser Tauschkreislauf aufbauen und die fraglichen KLT-Träger 3 fungieren als Ladehilfsmittel. Beispielsweise kommen solche KLT-Träger 3 in der Automobilindustrie und zur Aufnahme von Schüttgütern oder anderen Kleinteilen zum Einsatz. Im Rahmen des Beispiels fungieren die mehreren KLT-Träger 3 also gleichsam als auf dem jeweiligen Transportwagen 2 aufliegendes Transportgut 3.

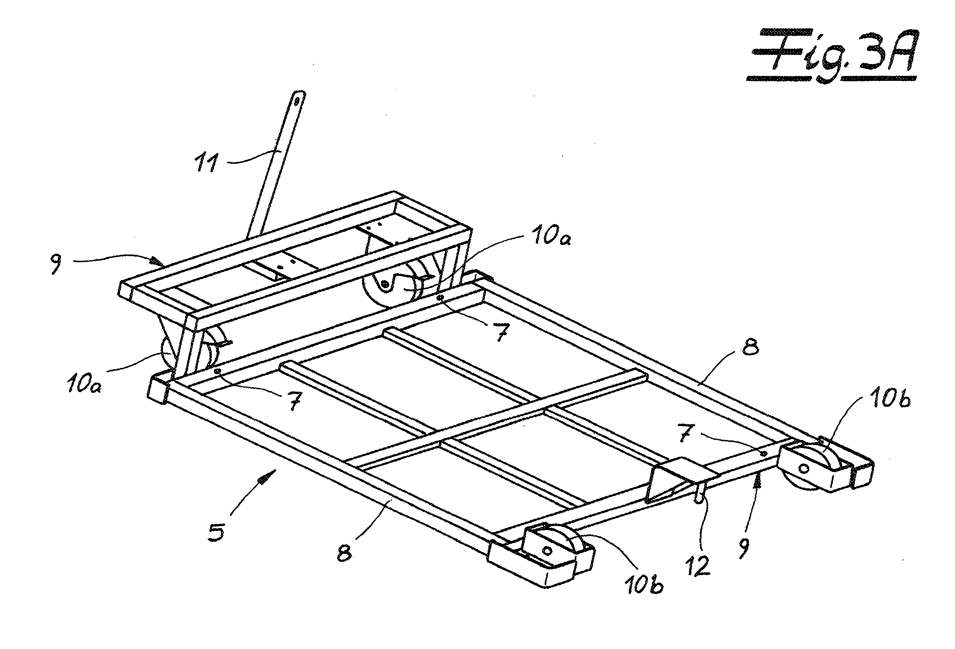

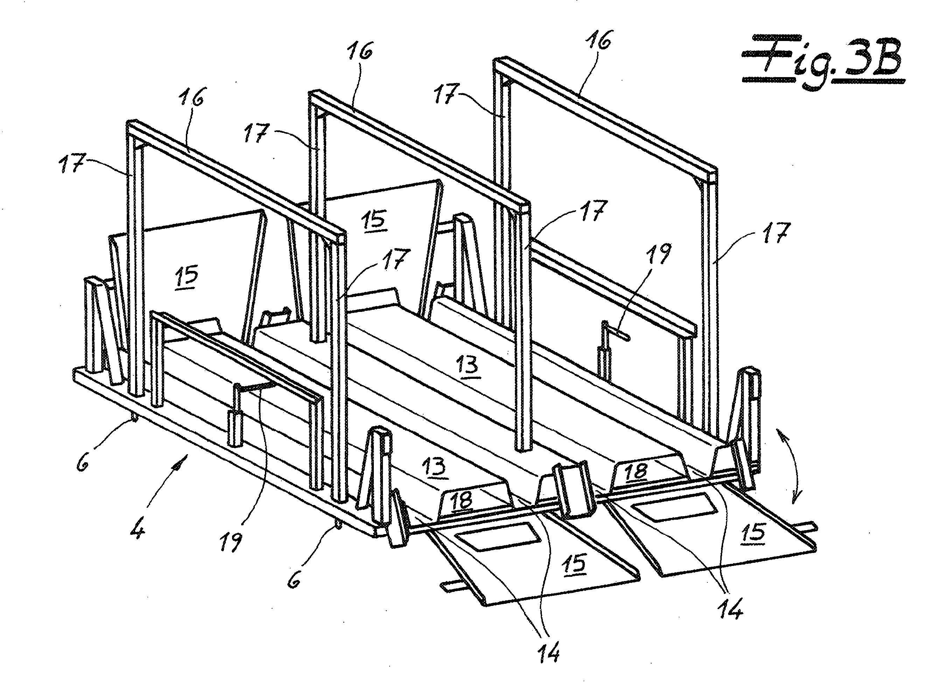

Die Transportwagen 2 werden von einer Plattform 4 getragen, die für sich genommen in der Fig. 3B dargestellt ist. Unabhängig von der Plattform 4 ist ein Fahrgestell 5 für die Plattform 4 vorgesehen. Das Fahrgestell 5 wird für sich genommen in der Fig. 3A gezeigt.

Erfindungsgemäß sind nun das Fahrgestell 5 und die Plattform 4 getrennt voneinander ausgelegt. Die getrennte Auslegung bedeutet, dass die Plattform 4 und das Fahrgestell 5 mechanisch nicht miteinander verbunden sind. Außerdem sind beide Elemente 4, 5 funktional verschieden ausgebildet, erfüllen also unterschiedliche Funktionen. So dient die Plattform 4 zur Aufnahme, Führung und Halterung des einen oder der mehreren Transportwagen 2. Dagegen fungiert das Fahrgestell 5 als fahrbare Basis zur Aufnahme der Plattform 4 oder auch an anderen Transportwaren.

Auf diese Weise lassen sich das Fahrgestell 5 und die Plattform 4 einzeln und auch gemeinsam nutzen. Zu diesem Zweck ruht die Plattform 4 lösbar auf dem Fahrgestell 5. Dabei sorgen lediglich in den Fig. 3A und 3B angedeutete Zentriermittel 6, 7 an einerseits der Plattform 4 und andererseits dem Fahrgestell 5 dafür, dass die Plattform 4 gegenüber dem Fahrgestell 5 bei deren Vereinigung ausgerichtet wird. Zu diesem Zweck lässt sich die Plattform 4 beispielsweise mit Hilfe eines Gabelstaplers auf das Fahrgestell 5 absenken und von diesem wieder bei Bedarf abheben. Die Zentriermittel 6 sind als unterseitige Zapfen 6 an der Plattform 4 ausgelegt. Diese Zentriermittel bzw. Zapfen 6 greifen in Ausnehmungen 7 bzw. weitere Zentriermittel 7 am Fahrgestell 5 ein.

Die Plattform 4 ruht im Detail auf einem bzw. mehreren Unterzügen 8 des Fahrgestells 5. Der jeweilige Unterzug 8 verbindet zwei Portale 9 des Fahrgestells 5 miteinander. Die Portale 9 tragen Rollen 10a, 10b. Tatsächlich ist das Fahrgestell 5 mit einem Paar Lenkrollen 10a und einem Paar Bockrollen 10b ausgerüstet. Dabei mögen entsprechend dem dargestellten Beispiel die beiden Lenkrollen 10a an das vordere Portal 9 des Fahrgestells 5 angeschlossen sein bzw. dieses Portal 9 tragen, wohingegen das hintere Portal 9 auf den Bockrollen bzw. dem Paar Bockrollen 10b ruht.

Darüber hinaus ist das vordere Portal 9 noch mit einer gelenkig an das Portal 9 angeschlossenen Deichsel 11 ausgerüstet. Am hinteren Portal 9 ist eine zugehörige Kupplung 12 zum Eingriff einer Deichsel 11 eines nachfolgenden Transportgerätes vorgesehen.

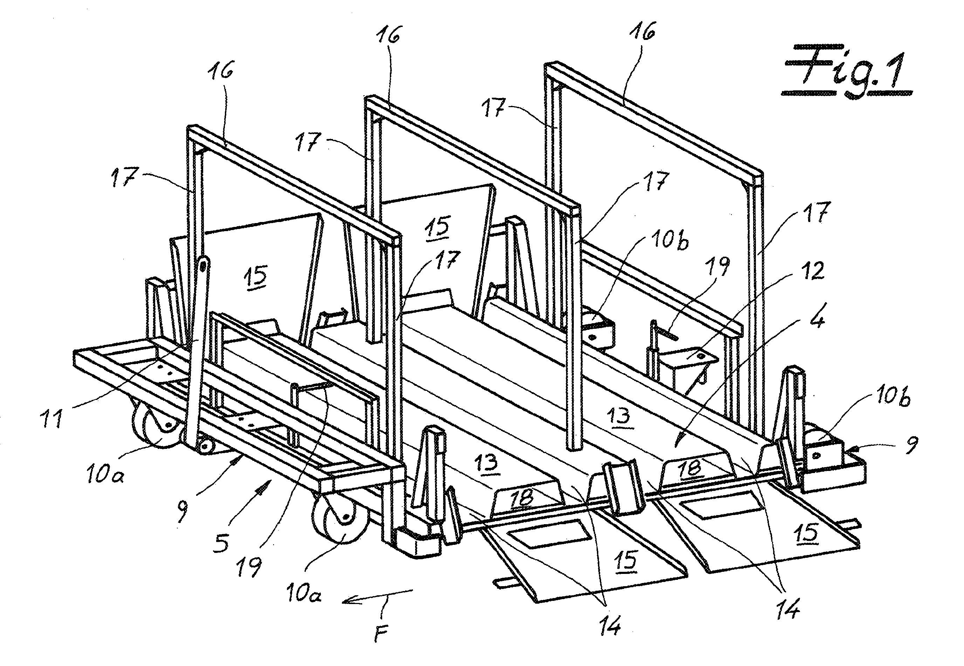

Die Plattform 4 ist mit wenigstens zwei voneinander beabstandeten Führungselementen 13 ausgerüstet. Tatsächlich erkennt man im Rahmen des Ausführungsbeispiels zwei benachbarte Führungselementpaare 13. Die Führungselementpaare 13 verfügen jeweils über muldenförmige Führungsschienen 14, in welchen die Laufrollen 1 des jeweiligen Transportwagens 2 ruhen. Man erkennt, dass die Führungselemente bzw. Führungselementpaare 13 und auch die muldenförmigen Führungsschienen 14 jeweils quer zur Fahrtrichtung F des Fahrgestells 5 angeordnet sind. Die Fahrtrichtung F ist in der Fig. 1 durch einen Pfeil angedeutet.

Um die Plattform 4 mit den Transportwagen 2 bestücken zu können, sind jeweils angelenkte Auffahrrampen 15 vorgesehen. Tatsächlich sind im Ausführungsbeispiel insgesamt vier Auffahrrampen 15 realisiert, und zwar jeweils zwei Auffahrrampen 15 einem Führungselementpaar 13 eingangsseitig und ausgangsseitig zugeordnet. Dabei sind die jeweiligen Auffahrrampen 15 an eine Querrandseite der Plattform 4 angelenkt. Tatsächlich sind beide Querrandseiten der Plattform 4 mit den jeweils angelenkten Auffahrrampen 15 ausgerüstet.

Die Plattform 4 ist darüber hinaus mit einem Sicherungsrahmen 16, 17 ausgerüstet. Tatsächlich setzt sich der Sicherungsrahmen 16, 17 aus jeweils horizontalen Sicherungselementen 16 und vertikalen Sicherungselementen 17 zusammen. Im Rahmen des Beispiels sind jeweils zwei vertikale Sicherungselemente 17 durch ein horizontales Sicherungselement 16 miteinander verbunden. Von diesen Sicherungselementen 16, 17 finden sich insgesamt drei Einheiten und zwar zwei jeweils randseitig und eines mittig der Plattform 4. Der Sicherungsrahmen 16, 17 ist insgesamt zusammenlegbar und aufklappbar ausgebildet und lässt sich von der Plattform 4 bei Bedarf entfernen.

Die einzelnen Sicherungselemente 16, 17 bzw. das horizontale Sicherungselement 16 mit den beiden endseitig angelenkten vertikalen Sicherungselementen 17 bilden eine Baueinheit. Dazu sind die vertikalen Sicherungselemente 17 jeweils endseitig und gelenkig an das horizontale Sicherungselement 16 angeschlossen. In zusammengelegtem Zustand lässt sich der Sicherungsrahmen 16, 17 bzw. können die einzelnen Sicherungselemente 16, 17 auf der Plattform 4 aufliegen. Tatsächlich eignen sich an dieser Stelle insbesondere die Führungsschienen 14 zur Aufnahme der Sicherungselemente 16, 17.

Die Plattform 4 ist darüber hinaus mit Aufnahmekammern 18 ausgerüstet. Diese Aufnahmekammern 18 sind ausgelegt, um nicht ausdrücklich dargestellte Hebeelemente an Transportfahrzeugen aufnehmen zu können. Tatsächlich handelt es sich bei diesen Hebeelementen vorteilhaft um Gabelzinken eines Gabelstaplers. Man erkennt, dass die Plattform 4 im Rahmen des Ausführungsbeispiels mit zwei parallel zueinander verlaufenden und beabstandeten Aufnahmekammern 18 ausgerüstet ist, in welche jeweils die Gabelzinken eines Gabelstaplers ein- und ausfahren können. Auf diese Weise kann die Plattform 4 von dem Fahrgestell 5 mit Hilfe des beschriebenen Gabelstaplers entfernt werden und wieder auf das Fahrgestell 5 aufgesetzt werden. Das erfolgt quer zur Fahrtrichtung F.

Man erkennt, dass bei entferntem Sicherungsrahmen 16, 17 die gesamte Bauhöhe des Transportgerätes in etwa derjenigen der Oberfläche der Portale 9 des Fahrgestelles 5 entspricht. Denn die einzelnen Sicherungselemente 16, 17 liegen in zusammengeklapptem Zustand auf der Plattform 4 auf bzw. werden von den Führungsschienen 14 aufgenommen. Dadurch lässt sich die Plattform 4 beispielsweise in einem Hochregallager bevorraten. Außerdem verfügt die Plattform 4 über Außenabmessungen, die in etwa denjenigen einer Palette und insbesondere einer genormten Europalette entsprechen. Dadurch kann der Transportwagen 2 im Beispielfall auch dazu genutzt werden, auf dem Unterzug 8 bzw. den beiden Unterzügen 8 des Fahrgestelles 5 anstelle der Plattform 4 die besagten Europaletten aufnehmen und transportieren zu können.

Man erkennt, dass sich die Auffahrrampen 15 von einer horizontalen Auffahrposition in eine im Wesentlichen vertikale Blockierposition verschwenken lassen, in welcher sie sich auch verriegeln lassen. Das deuten entsprechende Pfeile in Fig. 3B an. Daneben sind zusätzlich noch Blockiermittel 19 in Gestalt von Anschlagzapfen 19 realisiert. Diese Blockiermittel bzw. Anschlagzapfen 19 finden sich an dem Fahrgestell 5 für die Plattform 4. Tatsächlich handelt es sich hier um Anschlagzapfen 19, die in den Zwischenraum zwischen zwei in Längsrichtung aneinander anschließende Transportwagen 2 eingeschwenkt werden können, um die einzelnen Transportwagen 2 bzw. bzw. das darauf befindlichen Transportgut 3 voneinander trennen zu können. Gleichzeitig erfahren die Transportwagen 2 hierdurch eine zusätzliche Arretierung.

## Patentansprüche

1. Zusammenfassung aus einem Transportgerät und zumindest einem mit Laufrollen (1) bestückten Transportwagen (2) zur Aufnahme von darauf aufliegendem Transportgut (3), wobei das Transportgerät mit einer den Transportwagen (2) tragenden Plattform (4), und mit einem Fahrgestell (5) für die Plattform (4) ausgerüstet ist,
**dadurch gekennzeichnet, dass**
das Fahrgestell (5) und die Plattform (4) zur einzelnen und gemeinsamen Nutzung getrennt voneinander ausgelegt sind und zu diesem Zweck die Plattform (4) lösbar auf dem Fahrgestell (5) ruht

2. Zusammenfassung nach Anspruch 1, **dadurch gekennzeichnet, dass** zur gegenseitigen Ausrichtung der Plattform (4) gegenüber dem Fahrgestell (5) Zentriermittel (6, 7) an einerseits der Plattform (4) und andererseits dem Fahrgestell (5) ineinandergreifen.

3. Zusammenfassung nach Anspruch 1 oder 2, **dadurch gekennzeichnet, dass** die Plattform (4) auf wenigstens einem zwei Portale (9) miteinander verbindenden Unterzug (8) des Fahrgestells (5) aufliegt.

4. Zusammenfassung nach einem der Ansprüche 1 bis 3, **dadurch gekennzeichnet, dass** die Plattform (4) mit wenigstens zwei voneinander beabstandeten Führungselementen (13) zur Aufnahme der Laufrollen (1) des Transportwagens (2) ausgerüstet ist.

5. Zusammenfassung nach Anspruch 4, **dadurch gekennzeichnet, dass** zwei oder mehr benachbarte Führungselementpaare (13) vorgesehen sind.

6. Zusammenfassung nach Anspruch 4 oder 5, **dadurch gekennzeichnet, dass** die Führungselemente (13) quer zur Fahrtrichtung (F) des Fahrgestells (5) angeordnet sind.

7. Zusammenfassung nach einem der Ansprüche 1 bis 6, **dadurch gekennzeichnet, dass** die Plattform (4) an wenigstens einem Seitenrand eine angelenkte Auffahrrampe (15) für den Transportwagen (2) aufweist.

8. Zusammenfassung nach Anspruch 7, **dadurch gekennzeichnet, dass** die Auffahrrampe (15) an wenigstens eine Querrandseite der Plattform (4) angelenkt ist.

9. Zusammenfassung nach Anspruch 7 oder 8, **dadurch gekennzeichnet, dass** die beiden Querrandseiten der Plattform (4) mit jeweils zumindest einer angelenkten Auffahrrampe (15) ausgerüstet sind.

10. Zusammenfassung nach einem der Ansprüche 1 bis 9, **dadurch gekennzeichnet, dass** die Plattform (4) einen Sicherungsrahmen (16, 17) aufweist.

11. Zusammenfassung nach Anspruch 10, **dadurch gekennzeichnet, dass** der Sicherungsrahmen (16, 17) zusammenlegbar respektive aufklappbar ausgebildet ist.

12. Zusammenfassung nach Anspruch 10 oder 11, **dadurch gekennzeichnet, dass** sich der Sicherungsrahmen (16, 17) aus mehreren Sicherungselementen (16, 17) zusammensetzt, die in zusammengelegtem Zustand auf der Plattform (4) aufliegen, insbesondere von dem Führungselement (13) gehalten werden.

13. Zusammenfassung nach einem der Ansprüche 1 bis 12, **dadurch gekennzeichnet, dass** die Plattform (4) mit Aufnahmekammern (18) für Hebeelemente an Transportfahrzeugen, insbesondere für Gabelzinken eines Gabelstaplers, ausgerüstet ist.

14. Zusammenfassung nach einem der Ansprüche 1 bis 13, **dadurch gekennzeichnet, dass** das Fahrgestell (5) mit Rollen (10a, 10b) ausgerüstet ist, insbesondere einem Paar Lenkrollen (10a) und einem Paar Bockrollen (10b).

15. Zusammenfassung nach Anspruch 14 wenn abhängig von Anspruch 3, **dadurch gekennzeichnet, dass** die Rollen (10a, 10b) an die beiden Portale (9) des Fahrgestells (5) angeschlossen sind.

## Claims

1. A combination of a transport device and at least one transport cart (2) that is equipped with rollers (1) and serves for accommodating goods to be transported (3) lying thereon, wherein the transport device is equipped with a platform (4) that carries the transport cart (2) and with a chassis frame (5) for the platform (4),
**characterized in that**
the chassis frame (5) and the platform (4) are realized separately of one another for individual and common utilization and the platform (4) detachably rests on the chassis frame (5) for this purpose.

2. The combination according to Claim 1, **characterized in that** centring means (6, 7) arranged on the platform (4) on the one hand and on the chassis frame (5) on the other hand engage into one another in order to mutually align the platform (4) relative to the chassis frame (5).

3. The combination according to Claim 1 or 2, **characterized in that** the platform (4) lies on at least one binding beam (8) of the chassis frame (5) that connects two portals (9) to one another.

4. The combination according to one of Claims 1 to 3, **characterized in that** the platform (4) is equipped with at least two spaced-apart guide elements (13) for accommodating the rollers (1) of the transport cart (2).

5. The combination according to Claim 4, **characterized in that** two or more adjacent pairs of guide elements (13) are provided.

6. The combination according to Claim 4 or 5, **characterized in that** the guide elements (13) are arranged transverse to the driving direction (F) of the chassis frame (5).

7. The combination according to one of Claims 1 to 6, **characterized in that** the platform (4) features on at least one lateral edge a coupled drive-on ramp (15) for the transport cart (2).

8. The combination according to Claim 7, **characterized in that** the drive-on ramp (15) is coupled to at least one transverse edge side of the platform (4).

9. The combination according to Claim 7 or 8, **characterized in that** both transverse edge sides of the platform (4) are respectively equipped with at least one coupled drive-on ramp (15).

10. The combination according to one of Claims 1 to 9, **characterized in that** the platform (4) features a securing frame (16, 17).

11. The combination according to Claim 10, **characterized in that** the securing frame (16, 17) is respectively realized such that it can be collapsed and unfolded.

12. The combination according to Claim 10 or 11, **characterized in that** the securing frame (16, 17) is composed of several securing elements (16, 17) that in the collapsed state lie on the platform (4) and, in particular, are held by the guide element (13).

13. The combination according to one of Claims 1 to 12, **characterized in that** the platform (4) is equipped with receptacle chambers (18) for lifting elements on transport vehicles, particularly for lifting arms of a fork lift.

14. The combination according to one of Claims 1 to 13, **characterized in that** the chassis frame (5) is equipped with rollers (10a, 10b), particularly one pair of guide rollers (10a) and one pair of fixed rollers (10b).

15. The combination according to Claim 14 if dependent on Claim 3, **characterized in that** the rollers (10a, 10b) are connected to the two portals (9) of the chassis frame (5).

## Revendications

1. Groupement d'un appareil de transport et d'au moins un chariot de transport (2) doté de roulettes (1) pour recevoir de la marchandise de transport (3) reposant dessus, sachant que l'appareil de transport est doté d'une plateforme (4) portant le chariot de transport (2) et d'un châssis (5) pour la plateforme (4),
**caractérisé en ce que**
le châssis (5) et la plateforme (4) sont conçus séparément l'un de l'autre pour être utilisés individuellement et ensemble et dans ce but, la plateforme (4) repose de manière séparable sur le châssis (5).

2. Groupement selon la revendication 1, **caractérisé en ce que** pour aligner réciproquement la plateforme (4) par rapport au châssis (5), des moyens de centrage (6, 7) se mettent en prise l'un dans l'autre sur d'une part la plateforme (4) et d'autre part le châssis (5).

3. Groupement selon la revendication 1 ou 2, **caractérisé en ce que** la plateforme (4) repose sur au moins un renforcement (8) du châssis (5) reliant deux portiques (9) entre eux.

4. Groupement selon l'une des revendications 1 à 3, **caractérisé en ce que** la plateforme (4) est dotée d'au moins deux éléments de guidage (13) distants l'un de l'autre pour recevoir les roulettes (1) du chariot de transport (2).

5. Groupement selon la revendication 4, **caractérisé en ce que** deux ou plusieurs paires d'éléments de guidage (13) voisines sont prévues.

6. Groupement selon la revendication 4 ou 5, **caractérisé en ce que** les éléments de guidage (13) sont disposés transversalement au sens de la marche (F) du châssis (5).

7. Groupement selon l'une des revendications 1 à 6, **caractérisé en ce que** la plateforme (4) présente une rampe d'accès (15) articulée pour le chariot de transport (2) sur au moins un bord latéral.

8. Groupement selon la revendication 7, **caractérisé en ce que** la rampe d'accès (15) est articulée sur au moins un bord latéral transversal de la plateforme (4).

9. Groupement selon la revendication 7 ou 8, **caractérisé en ce que** les deux bords latéraux transversaux de la plateforme (4) sont dotés d'au moins une rampe d'accès (15) articulée respective.

10. Groupement selon l'une des revendications 1 à 9, **caractérisé en ce que** la plateforme (4) présente un cadre de protection (16, 17).

11. Groupement selon la revendication 10, **caractérisé en ce que** le cadre de protection (16, 17) est pliable, respectivement, rabattable.

12. Groupement selon la revendication 10 ou 11, **caractérisé en ce que** le cadre de protection (16, 17) est composé de plusieurs éléments de protection (16, 17) qui reposent sur la plateforme (4) lorsqu'ils sont montés et sont maintenus en particulier par l'élément de guidage (13).

13. Groupement selon l'une des revendications 1 à 12, **caractérisé en ce que** la plateforme (4) est dotée de chambres de réception (18) pour des éléments de levage sur des véhicules de transport, en particulier de dents de fourche d'un élévateur à fourche.

14. Groupement selon l'une des revendications 1 à 13, **caractérisé en ce que** le châssis (5) est doté de roues (10a, 10b), en particulier d'une paire de roues de direction (10a) et d'une paire de roues fixes (10b).

15. Groupement selon la revendication 14, si dépendante de la revendication 3, **caractérisé en ce que** les roues (10a, 10b) sont raccordées aux deux portiques (9) du châssis (5).
